(19)

**Europäisches Patentamt**
**European Patent Office**
**Office européen des brevets**

(11) **EP 4 589 030 A1**

(12) **EUROPEAN PATENT APPLICATION**
published in accordance with Art. 153(4) EPC

(43) Date of publication:
**23.07.2025 Bulletin 2025/30**

(51) International Patent Classification (IPC):
**C21D 9/28** (2006.01)      **C21D 1/10** (2006.01)

(21) Application number: **22958740.7**

(52) Cooperative Patent Classification (CPC):
**C21D 1/10; C21D 9/28;** Y02P 10/25

(22) Date of filing: **13.09.2022**

(86) International application number:
**PCT/JP2022/034240**

(87) International publication number:
**WO 2024/057406 (21.03.2024 Gazette 2024/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **YAMANE, Akihito**
  **Tokyo 100-8071 (JP)**
• **HATA, Toshiyuki**
  **Tokyo 100-8071 (JP)**
• **KOZUKA, Chihiro**
  **Tokyo 100-8071 (JP)**

(74) Representative: **Zimmermann & Partner**
**Patentanwälte mbB**
**Postfach 330 920**
**80069 München (DE)**

(54) **MOBILE HARDENING METHOD AND MOBILE HARDENING DEVICE**

(57)    There is provided a traverse hardening method including: heating a shaft-like body (10) with a plurality of high-frequency coils (111); causing a cooling unit (120) to follow the high-frequency coils (111) from a rear side in a relative movement direction of the high-frequency coils (111) along an axial direction of the shaft-like body (10) to cool a portion, which is heated by the high-frequency coils (111), with the cooling unit (120); and performing traverse hardening while moving the high-frequency coils (111) in a direction orthogonal to the axial direction of the shaft-like body (10) such that a distance between a surface of the shaft-like body (10) and each of the high-frequency coils (111) is constant, in which a velocity of the high-frequency coils (111) in the axial direction when the high-frequency coils (111) pass by a level difference portion (13) is lower than a velocity of the high-frequency coils (111) in the axial direction when the high-frequency coils (111) pass by a small-diameter portion (12) or a large-diameter portion (11).

FIG. 1

EP 4 589 030 A1

**Description**

TECHNICAL FIELD

The present invention relates to a traverse hardening method and a traverse hardening apparatus.

BACKGROUND ART

Various surface treatments may be performed on a component that is made of steel and required to have a long life. Particularly, induction hardening is widely used since it improves surface hardness, wear resistance, and surface fatigue resistance of a component. For this reason, various induction hardening apparatuses have been proposed so far. For example, in a case where induction hardening is to be performed on a long member such as a shaft-like body made of steel, so-called traverse hardening is performed. The traverse hardening is a method of performing hardening while moving high-frequency induction heating coils (also referred to as high-frequency coils) and a cooling unit relative to a shaft-like body in an axial direction of the shaft-like body.

In the traverse hardening, the shaft-like body is locally heated by the high-frequency coils until at least a surface layer of the shaft-like body becomes an austenite phase. Next, a cooling medium such as cooling liquid is sprayed onto the surface of the heated shaft-like body by a cooling unit, which is caused to follow the high-frequency coils, to rapidly cool the surface of the heated shaft-like body in a short time, so that the surface layer of the shaft-like body has a structure having a desired hardness such as a martensite phase.

The shaft-like body may have an outer diameter that is not constant in a direction along an axis thereof (also referred to as an axial direction). That is, there is a shaft-like body that includes a small-diameter portion having a relatively small outer diameter and a large-diameter portion having a relatively large outer diameter in an axial direction of the shaft-like body. Further, the small-diameter portion and the large-diameter portion are connected to each other by a level difference portion of which the outer diameter is gradually changed in the axial direction. For example, in a technique disclosed in Patent Document 1 or Patent Document 2, split coils are advanced or retracted in a radial direction of a shaft-like body, which is a body to be heated, to cope with a change in an outer diameter dimension of the shaft-like body.

However, in such a variable-diameter coil system, there is an advantage that an equipment configuration is simple, but it is important to appropriately control the movement velocity of the coils. The reason is as follows. In order to uniformly heat the shaft-like body in an axial direction at a level difference portion of the shaft-like body, it is desirable to set the movement velocity of the coils along the surface to be constant as much as possible in a case where the coils are to be moved in a radial direction of a shaft cross section. In a case where not the movement velocity of the coils along the surface but the movement velocity of the coils in the axial direction is set to be constant, heating is concentrated on corner portions of the level difference, and the heating of recessed portion of the level difference is conversely reduced. In order to suppress this inconvenience while the movement velocity of the coils in the axial direction is kept constant, a large amount of current is required due to the heating of the recessed portion of the level difference. For this reason, a problem occurs in that sufficient heating cannot be applied due to, for example, a constraint on an upper limit of the current which is a constraint on the cooling power of the coils. That is, the present inventors have found a problem that heating required to obtain a desired structure is not sufficiently performed at a level difference portion connecting a small-diameter portion and a large-diameter portion described above and in the vicinity thereof in a structure in the related art using the split coils disclosed in Patent Document 1 or Patent Document 2.

Citation List

Patent Documents

[0006]

　　Patent Document 1: Japanese Unexamined Patent Application, First Publication No. 2008-150640
　　Patent Document 2: Japanese Patent Publication No. S36-10457

SUMMARY OF INVENTION

Technical Problem

The present invention has been made in view of the above circumstances, and an object of the present invention is to provide a traverse hardening method and a traverse hardening apparatus that can perform desired hardening on a level difference portion of a shaft-like body, of which an outer diameter is not constant in an axial direction, and in the vicinity thereof.

Solution to problem

(1) A traverse hardening method according to an aspect of the present invention is a traverse hardening method of performing hardening on a shaft-like body including a small-diameter portion, a large-diameter portion, and a level difference portion, which connects the small-diameter portion and the large-diameter portion, in an axial direction using a traverse hardening apparatus that includes a plurality of high-frequency coils and a cooling unit. The traverse hardening method includes: heating the shaft-like body with the high-frequency coils while rotating the shaft-like body inserted inside the plurality of high-frequency coils relative to the plurality of high-frequency coils and moving the plurality of high-frequency coils relative to the shaft-like body in the axial direction; causing the cooling unit to follow the high-frequency coils from a rear side in a relative movement direction of the high-frequency coils along the axial direction of the shaft-like body to cool a portion, which is heated by the high-frequency coils, with the cooling unit; and performing traverse hardening while moving the high-frequency coils in a direction orthogonal to the axial direction of the shaft-like body such that a distance between a surface of the shaft-like body and each of the high-frequency coils is constant. A velocity of the high-frequency coils in the axial direction when the high-frequency coils pass by the level difference portion is lower than a velocity of the high-frequency coils in the axial direction when the high-frequency coils pass by the small-diameter portion or the large-diameter portion.

(2) In the traverse hardening method according to (1), in a case where the velocity of the high-frequency coils in the axial direction when the high-frequency coils pass by the small-diameter portion or the large-diameter portion is denoted by V0, the velocity of the high-frequency coils in the axial direction when the high-frequency coils pass by the level difference portion is denoted by Vs, and a velocity of the plurality of high-frequency coils in the direction orthogonal to the axial direction is denoted by Vc, Expression 1 may be satisfied.

$$V0^2 \leq Vs^2 + Vc^2 \ldots \text{Expression 1}$$

(3) In the traverse hardening method according to (1) or (2), a distance between the high-frequency coil and the cooling unit in the axial direction when the high-frequency coils pass by the level difference portion may be made shorter than a distance between the high-frequency coil and the cooling unit in the axial direction when the high-frequency coils pass by the small-diameter portion or the large-diameter portion.

(4) In the traverse hardening method according to any one of (1) to (3), the cooling unit may spray a cooling medium, and an amount or spray pressure of the cooling medium to be sprayed when the high-frequency coils pass by the level difference portion may be made smaller than an amount or spray pressure of the cooling medium to be sprayed when the high-frequency coils pass by the small-diameter portion or the large-diameter portion.

(5) A traverse hardening apparatus according to another aspect of the present invention is a traverse hardening apparatus that performs hardening on a shaft-like body including a small-diameter portion, a large-diameter portion, and a level difference portion, which connects the small-diameter portion and the large-diameter portion, in an axial direction. The traverse hardening apparatus includes: a plurality of high-frequency coils and a cooling unit that are provided in the axial direction; and a control unit that is configured to control movement of the plurality of high-frequency coils and the cooling unit. Each of the high-frequency coils includes an high-frequency induction portion for heating the shaft-like body and a conductive portion connected to the high-frequency induction portion, is movable relative to the shaft-like body in the axial direction, and is relatively movable in a plane perpendicular to the axial direction; the cooling unit includes a spray portion configured to spray a cooling medium and is movable relative to the shaft-like body in the axial direction; and the control unit is configured to control movement of the high-frequency coils in the plane such that a distance between a surface of the shaft-like body and each of the high-frequency coils is constant and is configured to control a velocity of the high-frequency coils such that a velocity of the high-frequency coils in the axial direction when the high-frequency coils pass by the level difference portion is lower than a velocity of the high-frequency coils in the axial direction when the high-frequency coils pass by the small-diameter portion or the large-diameter portion.

(6) In the traverse hardening apparatus according to (5), in a case where the velocity of the high-frequency coils in the axial direction when the high-frequency coils pass by the small-diameter portion or the large-diameter portion is denoted by V0, the velocity of the high-frequency coils in the axial direction when the high-frequency coils pass by the level difference portion is denoted by Vs, and a velocity of the plurality of high-frequency coils in a direction orthogonal to the axial direction is denoted by Vc, the control unit may be configured to control the high-frequency coils such that Expression 1 is satisfied.

$$V0^2 \leq Vs^2 + Vc^2 \ldots \text{Expression 1}$$

(7) In the traverse hardening apparatus according to (5) or (6), the control unit may be configured to control a distance between the high-frequency coil and the cooling unit such that a distance between the high-frequency coil and the cooling unit in the axial direction when the high-frequency coils pass by the level difference portion is shorter than a distance between the high-frequency coil and the cooling unit in the axial direction when the high-frequency coils pass by the small-diameter portion or the large-diameter portion.

(8) In the traverse hardening apparatus according to any one of (5) to (7), the control unit may be configured to control an amount or spray pressure of the cooling medium to be sprayed such that an amount or spray pressure of the cooling medium to be sprayed when the high-frequency coils pass by the level difference portion is smaller than an amount or spray pressure of the cooling medium to be sprayed when the high-frequency coils pass by the small-diameter portion or the large-diameter portion.

Advantageous Effects of Invention

According to the traverse hardening method and the traverse hardening apparatus of the aspects of the present invention, desired hardening can be performed on a level difference portion of a shaft-like body, of which an outer diameter is not constant in an axial direction, and in the vicinity thereof.

BRIEF DESCRIPTION OF DRAWINGS

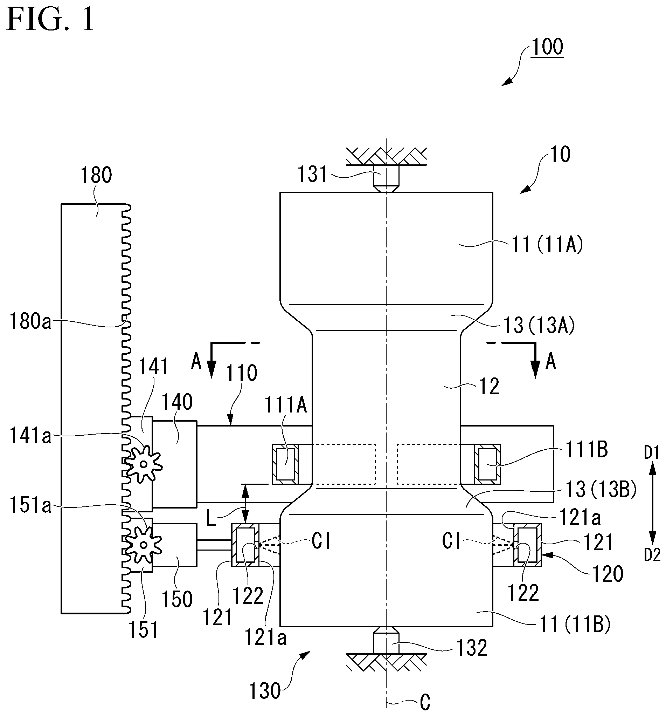

[FIG. 1] A partially cutaway view of a traverse hardening apparatus according to an embodiment of the present invention and a side view schematically showing the traverse hardening apparatus.

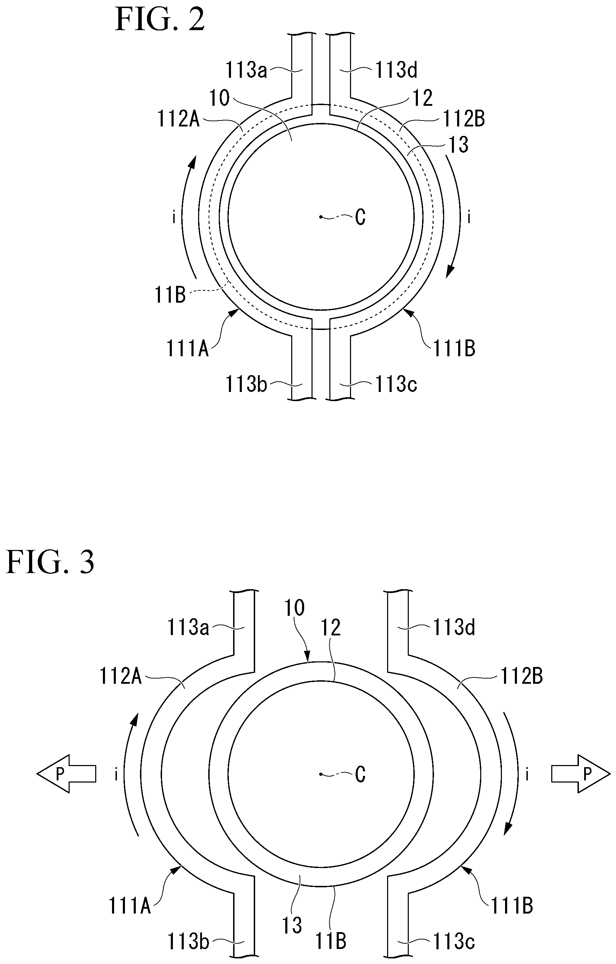

[FIG. 2] A cross-sectional view schematically showing a partial cross section of a shaft-like body and two high-frequency coils in a plan view viewed in a direction along an axis of the shaft-like body, and a view showing a state in which the high-frequency coils are moved to correspond to an outer diameter of a small-diameter portion.
[FIG. 3] A cross-sectional view schematically showing a partial cross section of the shaft-like body and the two high-frequency coils in a plan view viewed in the direction along the axis of the shaft-like body, and a view showing a state in which the high-frequency coils are moved to correspond to an outer diameter of a large-diameter portion.

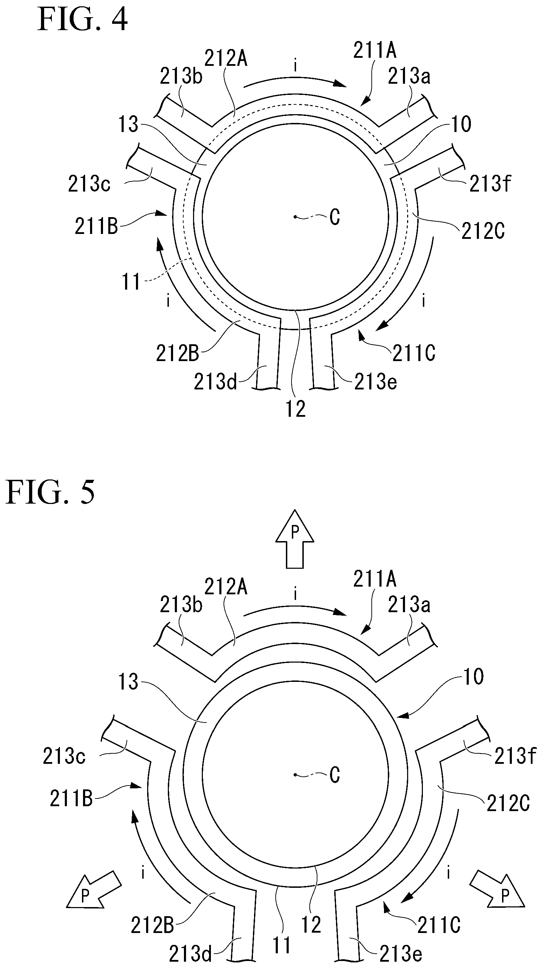

[FIG. 4] A cross-sectional view schematically showing a partial cross section of the shaft-like body and three high-frequency coils in a plan view viewed in the direction along the axis of the shaft-like body, and a view showing a state in which the high-frequency coils are moved to correspond to the outer diameter of the small-diameter portion.
[FIG. 5] A cross-sectional view schematically showing a partial cross section of the shaft-like body and the three high-frequency coils in a plan view viewed in the direction along the axis of the shaft-like body, and a view showing a state in which the high-frequency coils are moved to correspond to the outer diameter of the large-diameter portion.

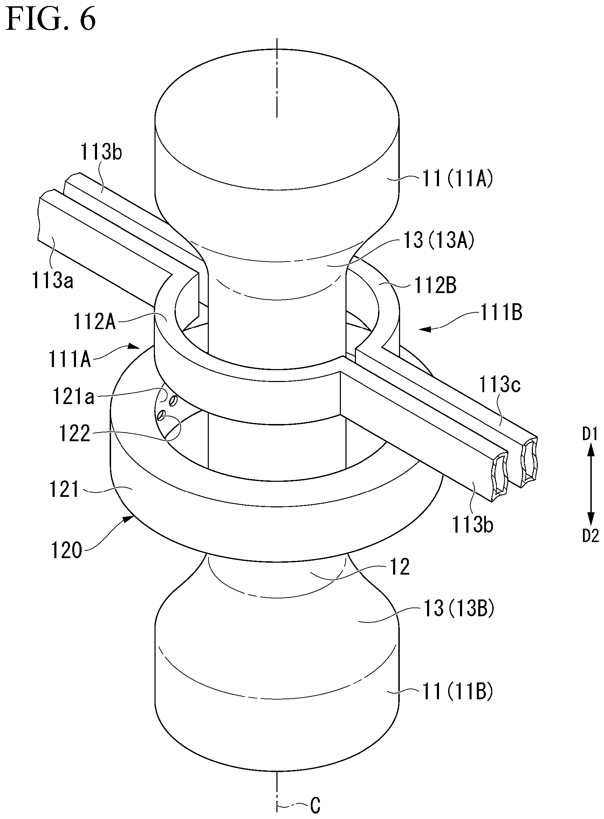

[FIG. 6] A schematic perspective view showing a positional relationship between a heating unit and a cooling unit and the shaft-like body of the embodiment of the present invention.

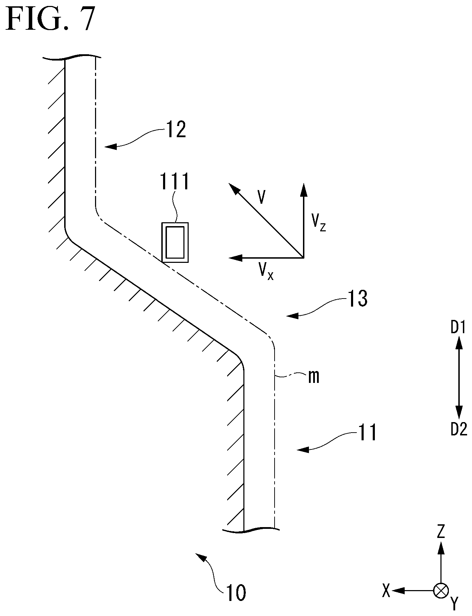

[FIG. 7] A schematic cross-sectional view of the shaft-like body and the high-frequency coil taken along a plane passing through the axis of the shaft-like body.

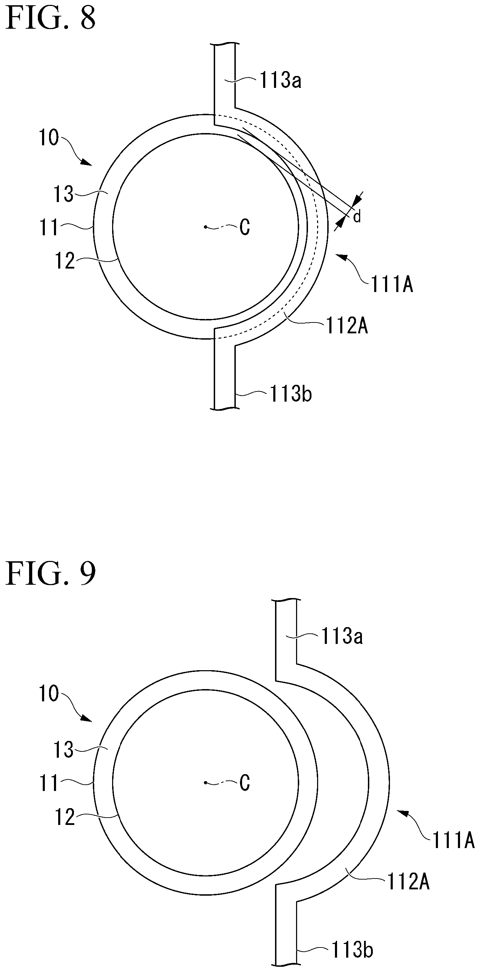

[FIG. 8] A cross-sectional view schematically showing a partial cross section of the shaft-like body and one high-frequency coil in a plan view viewed in the direction along the axis of the shaft-like body, and a view showing a state in which the high-frequency coil is moved to correspond to the outer diameter of the small-diameter portion.
[FIG. 9] A cross-sectional view schematically showing a partial cross section of the shaft-like body and one high-frequency coil in a plan view viewed in the direction along the axis of the shaft-like body, and a view showing a state in which the high-frequency coil is moved to correspond to the outer diameter of the large-diameter portion.

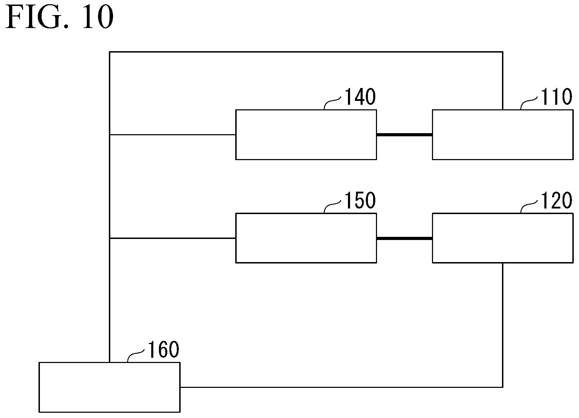

[FIG. 10] A block diagram showing the traverse hardening apparatus according to the embodiment of the present invention.

DESCRIPTION OF EMBODIMENTS

A traverse hardening method and a traverse hardening apparatus, which are embodiments of the present invention, will be described below with reference to FIGS. 1 to 10. It is obvious that the present invention is not limited to the following embodiments. Further, it is obvious that the respective elements of the following embodiments can be combined within the scope of the present invention.
As shown in FIG. 1, a traverse hardening apparatus 100 according to the present embodiment is a device for performing traverse hardening on a shaft-like body 10 using a high-frequency current. The traverse hardening is a method of hardening a body to be heated while moving a heating unit that includes high-frequency induction heating coils (also referred to as high-frequency coils) and a cooling unit, which includes a cooling ring following the heating unit, relative to the body to be heated. The body to be heated is, for example, a shaft-like body.

(Shaft-like body)

The shaft-like body 10 includes a large-diameter portion 11 (large-diameter portions 11A and 11B) and a small-diameter portion 12 that is provided between the large-diameter portions 11A and 11B in a direction along an axis C. Each of the large-diameter portions 11A and 11B and the small-diameter portion 12 is formed in a columnar shape. Each of the central axes of the large-diameter portions 11A and 11B and the small-diameter portion 12 is disposed to coincide with the axis C that is a common axis. In the present embodiment, the axis C is a central axis of the shaft-like body 10. Hereinafter, a portion disposed on one side D1 of the small-diameter portion 12 in the direction along the axis C is also referred to as a first large-diameter portion 11A. A portion disposed on the other side D2 of the small-diameter portion 12 in the direction along the axis C is also referred to as a second large-diameter portion 11B.

Each of the first large-diameter portion 11A, the small-diameter portion 12, and the second large-diameter portion 11B is formed in a columnar shape, and share the axis C as a common central axis. In a case where cross sections of the large-diameter portions 11A and 11B perpendicular to the axis C are viewed, an outer diameter of the small-diameter portion 12 is smaller than an outer diameter of each of the large-diameter portions 11A and 11B. In the present embodiment, the outer diameter of the large-diameter portion 11A and the outer diameter of the large-diameter portion 11B are set to be equal to each other, but the outer diameter of the large-diameter portion 11A and the outer diameter of the large-diameter portion 11B may be different from each other.

A level difference portion 13 (level difference portion 13A or 13B) for connecting the large-diameter portion 11A or 11B and the small-diameter portion 12 is provided between the large-diameter portion 11A or 11B and the small-diameter portion 12. The level difference portions 13A and 13B are inclined at a predetermined angle with respect to the axis C of the shaft-like body 10. An inclination angle is in a range of, for example, 15° to 90°. In a plane including the axis C of the shaft-like body 10, an outer diameter of the level difference portion 13 is not particularly limited and the level difference portion 13 may have a shape that allows the large-diameter portion 11 and the small-diameter portion 12 to be smoothly connected to each other as shown in FIG. 1. In the traverse hardening apparatus 100 according to the present embodiment, the shaft-like body 10 is disposed such that the axis C is parallel to an up-down direction of the traverse hardening apparatus 100.

The shaft-like body 10 is made of a conductive material such as low-alloy steel that contains 95% by weight or more of carbon steel or iron (Fe) having a ferrite phase or a pearlite phase. The shaft-like body may be an axle for a railway vehicle, or the like.

The numbers of the large-diameter portions 11, the level difference portions 13, and the like of the shaft-like body 10 are not limited to an example shown in FIG. 1. The number of each of the small-diameter portions 12, the large-diameter portions 11, and the level difference portions 13 may be 1, 2, or 3, or may be 4 or more. For example, the shaft-like body, which is an object for the traverse hardening method and the traverse hardening apparatus according to the present embodiment, may be a shaft-like body that includes one large-diameter portion and one small-diameter portion.

(Traverse hardening apparatus)

The traverse hardening apparatus 100 includes a heating unit 110, a cooling unit 120, a support unit 130, a heating unit-moving device 140, a cooling unit-moving device 150, and a control unit 160. As shown in FIG. 1, the heating unit 110 includes a plurality of high-frequency coils 111 (high-frequency coils 111A and 111B). The heating unit 110 is connected to the heating unit-moving device 140 that is a movement unit. The cooling unit 120 includes a cooling ring 121. The cooling unit 120 is connected to the cooling unit-moving device 150 that is a movement unit. The support unit 130 includes an upper center 131 and a lower center 132. The upper center 131 supports the first large-diameter portion 11A of the shaft-like body 10 from above the first large-diameter portion 11A. The lower center 132 supports the second large-diameter portion 11B of the shaft-like body 10 from below the second large-diameter portion 11B. The upper center 131 and the lower center 132 support the shaft-like body 10 such that one side D1 in a direction of the axis C is on an upper side and the other side D2 is on a lower side. The shaft-like body 10 is rotatable in a circumferential direction of the shaft-like body 10 around the axis C in a state of being supported by the upper center 131 and the lower center 132. The shaft-like body 10 can be rotated around the axis of the shaft-like body 10 via the upper center 131 and the lower center 132 by a drive device (not shown) during traverse hardening. The rotation of the shaft-like body 10 around the axis means that the shaft-like body 10 is rotated in any one of circumferential directions around the axis C of the shaft-like body 10. A line connecting the center of the upper center 131 and the center of the lower center 132 is in the up-down direction of the traverse hardening apparatus 100 (also referred to as the up-down direction).

The heating unit-moving device 140 supports the heating unit 110 and includes a support member 141 and a motor (not shown). The heating unit-moving device 140 is attached to a rack member 180. The rack member 180 extends in the up-down direction. Further, the support member 141 is provided with a pinion gear 141a, and the pinion gear 141a is engaged with a gear portion 180a of the rack member 180. In a case where the motor is driven, the pinion gear 141a is rotated and the heating unit-moving device 140 is configured to move up or down with respect to the rack member 180.

The cooling unit-moving device 150 supports the cooling unit 120 and includes a support member 151 and a motor (not shown). The cooling unit-moving device 150 is attached to the rack member 180. The support member 151 is provided with a pinion gear 151a, and the pinion gear 151a is engaged with the gear portion 180a of the rack member 180. In a case where the motor is driven, the pinion gear 151a is rotated and the cooling unit-moving device 150 is configured to move up or down with respect to the rack member 180.

The movement velocities of the heating unit-moving device 140 and the cooling unit-moving device 150 are independently controlled by the control unit 160. The heating unit-moving device 140 supporting the heating unit 110 and the cooling unit-moving device 150 supporting the cooling unit 120 are moved in the up-down direction, so that traverse hardening is performed in an axial direction of the shaft-like body 10. That is, the up-down direction of the traverse hardening apparatus 100 refers to a direction in which traverse hardening is performed.

An example in which a rack and a pinion gear are used as a moving mechanism for moving each of the heating unit 110 and the cooling unit 120 in the up-down direction is shown in FIG. 1. However, the moving mechanism of the present invention is not limited thereto and has only to be a mechanism that can move the heating unit 110 and the cooling unit 120 relative to the shaft-like body 10 in the up-down direction. Further, an example in which the heating unit 110 and the cooling unit 120 are moved with respect to the fixed shaft-like body 10 is shown in FIG. 1. However, the traverse hardening method and the traverse hardening apparatus according to the embodiments of the present invention are not limited thereto, and the heating unit 110 and the cooling unit 120 may be fixed and the shaft-like body 10 may be moved relative to the heating unit 110 and the cooling unit 120. Furthermore, an example in which the axial direction of the shaft-like body 10 is directed in a vertical direction is assumed in FIG. 1. However, the traverse hardening method and traverse hardening apparatus according to the embodiments of the present invention are not limited thereto, and the axial direction of the shaft-like body 10 may be directed in a horizontal direction or may be inclined with respect to the vertical direction.

(Heating unit)

The heating unit 110 of the present embodiment includes the plurality of high-frequency coils. FIG. 2 shows a schematic plan view of the high-frequency coils 111A and 111B of the heating unit 110 and the shaft-like body 10 viewed in a direction A-A of FIG. 1 that is a direction along the axis C (a direction parallel to the axial direction). In FIG. 2, the shaft-like body 10 is shown in a state of being cut in the middle of the small-diameter portion 12. As shown in FIG. 2, the high-frequency coils 111A and 111B of the heating unit 110 include high-frequency induction portions 112A and 112B of which part are formed in a C shape to surround the shaft-like body 10 in a plan view viewed in a direction along the axis C of the shaft-like body 10. End portions of high-frequency induction portion 112A are connected to conductive portions 113a and 113b. Similarly, end portions of the high-frequency induction portion 112B are also connected to conductive portions 113c and 113d.

The high-frequency coils 111A and 111B are arranged to be separated from each other in the circumferential direction around the axis C of the shaft-like body 10 (also referred to as the circumferential direction). This circumferential direction is parallel to a direction in which the high-frequency induction portion 112A of the high-frequency coil 111A and the high-frequency induction portion 112B of the high-frequency coil 111B extend. That is, a plane in which the high-frequency induction portions 112A and 112B extend (also referred to as a horizontal plane) is perpendicular to the up-down direction of the traverse hardening apparatus 100. Further, the horizontal plane is perpendicular to the axial direction of the shaft-like body 10.

In the horizontal plane, the shapes of the high-frequency induction portion 112A of the high-frequency coil 111A and the high-frequency induction portion 112B of the high-frequency coil 111B may be arc shapes shown in FIG. 2. In a case where the shapes of the high-frequency induction portions 112A and 112B are arc shapes, there is an advantage in that the high-frequency coils 111 and the shaft-like body 10 are substantially uniformly close to each other in the circumferential direction.

In a case where the shapes of the high-frequency induction portions 112A and 112B are arc shapes, it is preferable that a diameter of an inscribed circle, which is in contact with each of inner surfaces (surfaces facing the shaft-like body 10) of the high-frequency induction portions 112A and 112B facing the axis C, in the above-described horizontal plane is larger than the outer diameter of the small-diameter portion 12 of the shaft-like body 10 and smaller than the outer diameter of the large-diameter portion 11.

Alternatively, one or both of the high-frequency induction portions 112A and 112B may form part of an elliptical shape in the above-described horizontal plane or may have a shape formed by a plurality of straight lines. Further, the high-frequency coils 111A and 111B may have shapes in which a part of the high-frequency coil 111A and part of the high-frequency coil 111B overlap with each other as viewed in the axial direction of the shaft-like body 10. For example, the conductive portions 113a and 113b shown in FIG. 2 may be positioned closer to the high-frequency induction portion 112B than the conductive portions 113d and 113c, respectively. In this case, the high-frequency coils 111A and 111B are disposed at positions different from each other in the axial direction.

The conductive portions 113a and 113b and the conductive portions 113c and 113d extend from the end portions of the high-frequency induction portions 112A and 112B in a direction away from the shaft-like body 10, respectively. It is more preferable that each of the conductive portions 113a, 113b, 113c, and 113d extends in a direction orthogonal to the axis C of the shaft-like body 10 at a position where the high-frequency coils 111A and 111B are closest to each other.

Each of the high-frequency coils 111A and 111B can be moved in a direction in which the high-frequency coils 111A and 111B are separated from or approach the shaft-like body 10. FIG. 2 shows a state in which the high-frequency coils 111A and 111B are closest to the small-diameter portion 12 of the shaft-like body 10. It is preferable that the small-diameter portion 12 is heated in this state.

Meanwhile, FIG. 3 shows a state in which the high-frequency coils 111A and 111B are moved in directions in which the high-frequency coils 111A and 111B are separated from the shaft-like body 10 (directions P in FIG. 3) to correspond to the outer diameter of the large-diameter portion 11B and surround the large-diameter portion 11B of the shaft-like body 10. It is preferable that the large-diameter portion 11 is heated in this state. In the state shown in FIG. 3, the high-frequency coils 111A and 111B are moved in the direction of the axis C of the shaft-like body 10, and the high-frequency coils 111A and 111B are positioned at the position of the large-diameter portion 11 in the axial direction.

The conductive portions 113a and 113b of the high-frequency coil 111A are connected to a power source (not shown) and the high-frequency induction portion 112A is supplied with a high-frequency current from the power source, so that an induction current is generated in the shaft-like body 10 and Joule heat is generated in the shaft-like body 10 due to the electric resistance of the shaft-like body 10. The same applies to the high-frequency coil 111B. For example, a current flows in the high-frequency coils 111A and 111B in directions of arrows i shown in FIG. 2 and the like. A current flows in the plurality of high-frequency coils 111 in the same direction in the circumferential direction.

Each of the high-frequency coils 111A and 111B may be connected to the heating unit 110 via a coil movement unit (not shown). The coil movement unit includes a drive motor and a stage, and is configured to be capable of moving each of the high-frequency coils 111A and 111B in a direction orthogonal to the axis C of the shaft-like body 10, that is, in the horizontal plane. The movement of the high-frequency coils 111A and 111B in the horizontal plane is controlled by the control unit 160. The power source may be fixed to the heating unit 110 or may be moved together with the high-frequency coils 111 by the coil movement unit.

It is preferable that the number of the plurality of high-frequency coils 111 of the traverse hardening apparatus 100 is two from the viewpoint that a close portion where the high-frequency coils 111 and the shaft-like body 10 are close to each other can be made longest in the circumferential direction. Further, it is preferable that the number of the plurality of high-frequency coils 111 is three shown in FIGS. 4 and 5 from the viewpoint of preventing a gap between each high-frequency coil 111 and the shaft-like body 10 from being excessively increased even in a case where the close portions are made long and distances between the plurality of high-frequency coils 111 are reduced or increased to follow a change in the diameter of the shaft-like body 10. In a case where three high-frequency coils 211 (high-frequency coils 211A, 211B, and 211C) shown in FIGS. 4 and 5 are employed, the same configuration as in a case where the two high-frequency coils 111 and the heating unit 110 described above are used can be employed. The plurality of high-frequency coils 111 are disposed to be separated from each other in the horizontal plane. It is preferable that each of the plurality of high-frequency coils 111 is movable in a direction orthogonal to the axis C of the shaft-like body 10 on which traverse hardening is to be performed.

The cross section of each portion of the high-frequency coil 111 in an extension direction may have a rectangular shape shown in FIG. 1, or may have an elliptical shape or a circular shape. Further, the inside of the high-frequency coil 111 may be formed as a cavity, so that a cooling medium for cooling flows through the cavity.

It is preferable that the high-frequency coil 111 is made of a material such as copper since the material such as copper is non-magnetic, is less likely to cause an eddy-current loss, and is also less likely to cause a Joule loss due to small electric resistance. The surfaces of the high-frequency coils 111 may be covered with a material having heat resistance and high insulation properties such as bakelite or silicon so that a short circuit does not occur even in a case where the high-frequency coils 111 are in contact with each other or the high-frequency coils 111 and the shaft-like body 10 are in contact with each other.

For example, each of the conductive portions 113a, 113b, 113c, and 113d of the high-frequency coils 111 may be connected to the heating unit 110 via a support member (not shown).

(Cooling unit)

The cooling unit 120 is disposed behind the heating unit 110 in a relative movement direction. The relative movement direction means a direction in which the heating unit 110 is moved relative to the shaft-like body 10 in the axial direction during traverse hardening. In the case of the present embodiment, the cooling unit 120 is disposed below the heating unit 110 as shown in FIG. 1 since the heating unit 110 performs traverse hardening while moving in a direction of D1 shown in FIG. 1. FIG. 6 shows a positional relationship between the heating unit 110 and the cooling unit 120 and the shaft-like body 10 of the present embodiment.

The cooling unit 120 is formed in an annular shape in the present embodiment. The cooling unit 120 has an internal space through which the shaft-like body 10 can be inserted. A plurality of spray nozzles 122, which are spray portions, are formed on an inner circumferential surface 121a of the cooling ring 121 of the cooling unit 120, which faces the internal space, to be separated from each other in the circumferential direction. A cooling medium can be sprayed from each spray nozzle 122 toward the internal space. The shape of the cooling unit 120 is not limited to an annular shape shown in FIG. 6, and may be a circular shape, an elliptical shape, a rectangular shape, or the like in the horizontal plane perpendicular to the up-down direction.

A pump (not shown) is connected to the cooling unit 120. The pump supplies a cooling medium Cl to the cooling unit 120. The cooling medium Cl supplied to the cooling ring 121 of the cooling unit 120 is sprayed toward the shaft-like body 10 through the plurality of spray nozzles 122 and cools the shaft-like body 10. The cooling medium Cl is, for example, water, oil, an aqueous solution equivalent to oil, or the like. For example, the pump is controlled by the control unit 160, so that the amount of the cooling medium Cl to be sprayed can be adjusted.

FIG. 7 shows a cross-sectional view of the shaft-like body 10 and the high-frequency coil 111 taken along a plane passing through the axis of the shaft-like body 10. An X-coordinate axis shown FIG. 7 is orthogonal to the axis C of the shaft-like body 10 and is orthogonal to a Z-coordinate axis and a Y-coordinate axis. The Y-coordinate axis is directed in a direction perpendicular to the plane of the paper in FIG. 7 and is orthogonal to the X-coordinate axis and the Z-coordinate axis. The Z-coordinate axis is parallel to the axis C (the up-down direction of the traverse hardening apparatus 100), and a positive direction of the Z coordinate coincides with the direction of D1.

Here, in a case where the coils are controlled to move at a constant velocity along the surface of the level difference portion and the cooling ring is caused to follow the coils, the movement velocity of the cooling ring is greatly reduced during the movement of the cooling ring along a local portion of the level difference portion. In this case, a problem occurs in that cooling is not uniform in the axial direction of a body to be heated. In the traverse hardening apparatus 100 according to the present embodiment, distances between the surface of the shaft-like body 10 and the high-frequency coils 111A and 111B are controlled to be constant. The distances between the surface of the shaft-like body 10 and the high-frequency coils 111A and 111B are distances that are defined as the shortest distances between the surface of the shaft-like body 10 and the surfaces of the high-frequency coils 111. An eddy current generated in the shaft-like body 10, which is the body to be heated, by the current flowing in the high-frequency coils 111 is significantly changed depending on distances between the high-frequency coils 111 and the shaft-like body. However, in a case where the distances are kept so that a change in the eddy current does not occur, the magnitude of the eddy current is kept constant and thus heating is also kept constant. An imaginary line m shown in FIG. 7 is a line drawn such that a distance from the surface of the shaft-like body 10 in a direction perpendicular to the surface of the shaft-like body 10 in a plane passing through the axis of the shaft-like body 10 is constant. A portion of the high-frequency coil 111 closest to the shaft-like body 10 is moved on the imaginary line m.

Here, a Z-coordinate component of the movement velocity of the high-frequency coils 111 relative to the shaft-like body 10 is denoted by Vz, and an X-coordinate component of the movement velocity of the high-frequency coils 111 relative to the shaft-like body 10 is denoted by Vx. Vz corresponds to the movement velocity of the high-frequency coils 111 in the axial direction relative to the shaft-like body 10. Vx corresponds to the movement velocity of the high-frequency coils 111 in a direction, which is orthogonal to the axis C of the shaft-like body 10, relative to the shaft-like body 10.

In a case where the coordinate components of the movement velocity of the high-frequency coils 111 are defined as described above, Vx is 0 since the high-frequency coils 111 are moved in the axial direction and are not moved in a direction orthogonal to the axis C when the high-frequency coils 111 pass by the large-diameter portion 11 or the small-diameter portion 12 in the traverse hardening apparatus according to the present embodiment. For this reason, a movement velocity V0 of the high-frequency coils 111 along the imaginary line m when the high-frequency coils 111 pass by the large-diameter portion 11 or the small-diameter portion 12 is equal to a Z-coordinate component velocity V0z.

On the other hand, when the high-frequency coils 111 pass by the level difference portion 13, the high-frequency coils 111 are moved in the axial direction and are also moved in a direction orthogonal to the axis C. For this reason, a movement velocity V1 of the high-frequency coils 111 along the imaginary line m when the high-frequency coils 111 pass by the level difference portion 13 satisfies a relationship of Equation A described below.

$$V1^2 = V1x^2 + V1z^2 \ldots \text{Equation A}$$

Here, V1x is an X-coordinate component velocity when the high-frequency coils 111 pass by the level difference portion 13, and V1z is a Z-coordinate component velocity when the high-frequency coils 111 pass by the level difference portion 13.

In the traverse hardening apparatus 100 according to the present embodiment, it is desirable that the movement velocity of the high-frequency coils 111 along the imaginary line m when the high-frequency coils 111 pass by the large-diameter portion 11, the small-diameter portion 12, and the level difference portion 13 is as constant as possible. In other words, this means that the high-frequency coils 111 are moved to satisfy a relationship of "V0 = V1". Here, Expression B described below is derived from a relationship of "V0 = V0z and V0 ≤ V1" and Equation A.

$$V0z^2 \leq V1x^2 + V1z^2 \ ... \ \text{Expression B}$$

In the control of the traverse hardening apparatus 100, it is desirable to satisfy a relationship of "V0 = V1". However, "V0 = V1" may not be capable of being satisfied due to various constraints, such as the response performance of an actuator such as a motor for activating the moving device and response performance in a case where the flow rate of the cooling medium Cl to be sprayed by the cooling unit 120 is changed, and it is desirable to bring V0 as close as possible to V1 even under such constraints.

Heat is generated on the surface of the body to be heated due to an eddy current generated in the shaft-like body 10, which is the body to be heated, by the current flowing in the high-frequency coils 111. However, in a case where the moving distance of the high-frequency coils 111 per unit time is kept constant as described above, the heat generation energy per unit time and per unit length of the surface of the shaft-like body 10 is also constant.

As is clear from Expression B, the movement velocity V1z of the high-frequency coils 111 in the axial direction when the high-frequency coils 111 pass by the level difference portion 13 is lower than the movement velocity V0z of the high-frequency coils 111 in the axial direction when the high-frequency coils 111 pass by the large-diameter portion 11 or the small-diameter portion 12. Since such a configuration is employed in the traverse hardening apparatus 100 according to the present embodiment, desired hardening can be performed on the level difference portion of the shaft-like body, of which the outer diameter is not constant in the axial direction, and in the vicinity thereof.

That is, in the traverse hardening apparatus 100 according to the present embodiment, it is more preferable that the movement velocity of the high-frequency coils 111 is controlled to satisfy Expression 1 described below in a case where the velocity of the high-frequency coils 111 in the axial direction when the high-frequency coils 111 pass by the level difference portion 13 is denoted by Vs and the velocity of the high-frequency coils 111 in the direction orthogonal to the axial direction is denoted by Vc.

$$V0^2 \leq Vs^2 + Vc^2 \ ... \ \text{Expression 1}$$

Vs is the same as V1z described above, and Vc is the same as V1x described above.

The distances between the surface of the shaft-like body 10 and the high-frequency coils 111A and 111B are average distances of distances between the surface of the shaft-like body 10 and the high-frequency induction portions 112 of the high-frequency coils 111 in the direction perpendicular to the surface of the shaft-like body 10 in the horizontal plane, as shown in FIG. 8. For example, in an example of FIG. 8, a distance d between the surface of the shaft-like body 10 at the small-diameter portion 12 and the high-frequency induction portion 112 of each high-frequency coil 111 is constant in the circumferential direction. On the other hand, in an example of FIG. 9, a distance between the surface of the shaft-like body 10 at the large-diameter portion 11 and the high-frequency induction portion 112 of each high-frequency coil 111 is not constant in the circumferential direction. In this case, an arithmetic average of the shortest and longest distances between the surface of the shaft-like body 10 and the high-frequency induction portion 112 of each high-frequency coil 111 is employed. In FIG. 8 or FIG. 9, only one high-frequency coil 111A is shown for the sake of description.

Further, it is preferable that the plurality of high-frequency coils 111 are moved at velocities equal to each other in the horizontal plane.

In general, in a case where cooling after heating for hardening is delayed, a part of a hardened portion may be subjected to pearlitic transformation, that is, may not be subjected to sufficient hardening. Further, even in a case where the cooling after heating is performed rapidly, the grain size of the crystal of the hardened portion is changed depending on a time from heating to cooling or the volume fraction of residual austenite is changed. As a result, the hardness or mechanical properties of a hardened material are changed. However, since the following configuration is employed in the traverse hardening apparatus 100 according to the present embodiment, it is possible to suppress a change in hardness or mechanical properties of such a hardened material.

In the traverse hardening apparatus 100 according to the present embodiment, it is more preferable that a distance between the high-frequency coil 111 and the cooling unit 120 in the axial direction when the high-frequency coils 111 pass by the level difference portion 13 is controlled to be shorter than a distance between the high-frequency coil 111 and the cooling unit 120 in the axial direction when the high-frequency coils 111 pass by the large-diameter portion 11 or the small-diameter portion 12. In a case where such a configuration is employed, a time from heating to the start of cooling approaches a constant and a change in the grain size and a change in the volume fraction of residual austenite can be suppressed. Therefore, the hardness and mechanical properties of a material become constant. Further, there is an advantage in that the movement velocity of the cooling unit 120 approaches a constant and cooling power also approaches a constant. Specifically, in this operation, it is desirable to control the axial position of the cooling unit 120 so that an end portion (a front end portion in the movement direction) of the cooling unit 120 passes through an axial position through which an end portion (a rear end portion in the movement direction) of each high-frequency coil 111 has passed, after a certain period of time. Due to such an operation, a distance between the high-frequency coil 111 and the cooling unit 120 in the axial direction in a case where the movement velocity of the high-frequency coils 111 in the axial direction is low is shorter than a distance between the high-frequency coil 111 and the cooling unit 120 in the axial direction in a case where the movement velocity of the high-frequency coils 111 in the axial direction is high.

The distance between the high-frequency coil 111 and the cooling unit 120 in the axial direction is a distance between a lower end portion of the high-frequency coil 111 and an upper end portion of the cooling unit 120 in the up-down direction of the traverse hardening apparatus 100, as shown as a distance L in FIG. 1. In other words, the lower end portion of the high-frequency coil 111 is a rear end portion in the movement direction, and the upper end portion of the cooling unit 120 is a front end portion in the movement direction.

In the traverse hardening apparatus 100 according to the present embodiment, it is more preferable that the amount of the cooling medium Cl to be sprayed when the high-frequency coils 111 pass by the level difference portion 13 is controlled to be less than the amount of the cooling medium Cl to be sprayed when the high-frequency coils 111 pass by the large-diameter portion 11 or the small-diameter portion 12.

As an aspect of cooling, it is desirable to control cooling power by adjusting the amount or spray pressure of the cooling medium Cl to be sprayed so that a cooling rate on a CCT curve is suppressed within a range in which a change in hardness does not occur. More specifically, the amount of the cooling medium Cl to be sprayed is increased or the spray pressure of the cooling medium Cl is increased in a case where the movement velocity of the high-frequency coils 111 in the axial direction is high, and the amount of the cooling medium Cl to be sprayed is reduced or the spray pressure of the cooling medium Cl is reduced in a case where the movement velocity of the heating coils in the axial direction is low. With regard to a relationship between a heat transfer coefficient h and the amount of sprayed water (sprayed water density) W, there is known that, for example, h is proportional to the n-th power of W (wherein n is a constant determined depending on water cooling conditions) (Mitsuka: Cooling Technology of High Temperature Steel, Iron and Steel/Volume 79, No. 6, p. N405-N416 (1993)). Here, in a case where the movement velocity of the cooling unit 120 is high, a cooling capacity per unit time is reduced in inverse proportion to the velocity. Therefore, the amount W of sprayed water of W'' is determined such that the heat transfer coefficient h is increased by the rate of increase of velocity. Since a cooling capacity can be kept constant regardless of the movement velocity of the cooling unit 120 in this manner, the cooling rate of the body to be heated can be kept in a desirable range.

FIG. 10 shows a block diagram of the traverse hardening apparatus 100 according to the present embodiment. It has been described in an example of the present embodiment that the control unit 160 controls the movement of the heating unit-moving device 140 and the cooling unit-moving device 150 in the axial direction, the movement of the high-frequency coils 111 in the horizontal plane, or the amount of the cooling medium Cl to be sprayed by the pump included in the cooling unit 120. However, the traverse hardening apparatus 100 may include a plurality of control units, and be configured such that the respective control units perform the control of the movement of the devices and the coils and the control of the amount of the cooling medium to be sprayed. For example, the traverse hardening apparatus 100 may include a coil position control unit that can independently change the movement velocity Vz of the high-frequency coils 111 in the axial direction of the shaft-like body 10 and Vx in the direction orthogonal to the axis C. Further, the traverse hardening apparatus 100 may include a control unit that can control the movement velocity of the cooling unit 120 to be moved in the axial direction by the cooling unit-moving device 150 independently of the movement velocity of the heating unit 110 to be moved by the heating unit-moving device 140.

Next, a method of performing traverse hardening on the shaft-like body 10 using the traverse hardening apparatus 100 according to the present embodiment will be described.

First, as shown in FIG. 1, the heating unit 110 and the cooling unit 120 are positioned on a lower end side of the shaft-like body 10. Next, a high-frequency current is made to flow in the high-frequency coils 111. Further, the pump is driven to spray the cooling medium Cl from the plurality of spray nozzles 122 of the cooling unit 120. Next, the shaft-like body 10 is rotated by the support unit 130. Then, the motors are driven to move the heating unit-moving device 140 and the cooling unit-moving device 150 upward with respect to the rack member 180. Accordingly, the heating unit 110 and the cooling unit 120 are inserted around the shaft-like body 10 in order, and are moved up with respect to the shaft-like body 10.

In the heating unit 110, an induction current is generated on the surface of the shaft-like body 10 by the high-frequency current supplied to the high-frequency coils 111 and Joule heat is generated due to the electric resistance of the shaft-like body 10, so that a surface layer of the shaft-like body 10 is heated up to a region in which a austenite phase is formed.

Subsequently, the cooling unit 120 is moved up to a portion heated by the heating unit 110, and the cooling medium Cl is sprayed onto the heated portion of the shaft-like body 10. Accordingly, at least the surface layer of the shaft-like body 10 is rapidly cooled, so that a martensitic structure is formed. As the heating unit 110 and the cooling unit 120 are moved up from the lower end of the shaft-like body 10 toward the upper end thereof, heating performed by the heating unit 110 and cooling performed by the cooling unit 120 are sequentially performed. As a result, the surface of the shaft-like body 10 is subjected to induction hardening.

In the traverse hardening method according to the present embodiment, the high-frequency coils 111 are moved in a direction orthogonal to the axial direction of the shaft-like body 10 such that a distance between the surface of the shaft-like body 10 and each high-frequency coil 111 is constant, and the velocity of the high-frequency coils 111 in the axial direction when the high-frequency coils 111 pass by the level difference portion 13 is lower than the velocity of the high-frequency coils 111 in the axial direction when the high-frequency coils 111 pass by the small-diameter portion 12 or the large-diameter portion 11. Accordingly, desired hardening can be performed on the level difference portion 13 of the shaft-like body 10, of which the outer diameter is not constant in the axial direction, and in the vicinity thereof.

The present invention includes the use of a traverse hardening apparatus that performs hardening on a shaft-like body including a small-diameter portion, a large-diameter portion, and a level difference portion, which connects the small-diameter portion and the large-diameter portion, in an axial direction. The traverse hardening apparatus includes: a plurality of high-frequency coils and a cooling unit that are provided in the axial direction; and a control unit that is capable of controlling movement of the plurality of high-frequency coils and the cooling unit. Each of the high-frequency coils includes an high-frequency induction portion for heating the shaft-like body and a conductive portion connected to the high-frequency induction portion, is movable relative to the shaft-like body in the axial direction, and is relatively movable in a plane perpendicular to the axial direction; the cooling unit includes a spray portion capable of spraying a cooling medium and is movable relative to the shaft-like body in the axial direction; and the control unit is capable of controlling movement of the high-frequency coils in the plane such that a distance between a surface of the shaft-like body and each of the high-frequency coils is constant and is capable of controlling a velocity of the high-frequency coils such that a velocity of the high-frequency coils in the axial direction when the high-frequency coils pass by the level difference portion is lower than a velocity of the high-frequency coils in the axial direction when the high-frequency coils pass by the small-diameter portion or the large-diameter portion.

In the use of the above-described traverse hardening apparatus, in a case where the velocity of the high-frequency coils in the axial direction when the high-frequency coils pass by the small-diameter portion or the large-diameter portion is denoted by V0, the velocity of the high-frequency coils in the axial direction when the high-frequency coils pass by the level difference portion is denoted by Vs, and a velocity of the plurality of high-frequency coils in a direction orthogonal to the axial direction is denoted by Vc, the control unit may be capable of controlling the high-frequency coils such that Expression 1 is satisfied.

$$\mathrm{V0}^2 \leq \mathrm{Vs}^2 + \mathrm{Vc}^2 \ldots \mathrm{Expression}\ 1$$

In the use of the above-described traverse hardening apparatus, the control unit may be capable of controlling a distance between the high-frequency coil and the cooling unit such that a distance between the high-frequency coil and the cooling unit in the axial direction when the high-frequency coils pass by the level difference portion is shorter than a distance between the high-frequency coil and the cooling unit in the axial direction when the high-frequency coils pass by the small-diameter portion or the large-diameter portion.

In the use of the above-described traverse hardening apparatus, the control unit may be capable of controlling the amount or spray pressure of the cooling medium to be sprayed such that the amount or spray pressure of the cooling medium to be sprayed when the high-frequency coils pass by the level difference portion is smaller than the amount or spray pressure of the cooling medium to be sprayed when the high-frequency coils pass by the small-diameter portion or the large-diameter portion.

Examples

[Experimental example 1]

An analysis using a numerical simulation was performed to verify a heating state of a level difference portion in a case where traverse hardening is performed on a shaft-like body including a small-diameter portion, a large-diameter portion, and a level difference portion, which connects the small-diameter portion and the large-diameter portion, in an axial direction using a traverse hardening apparatus including a plurality of high-frequency coils. In the present experimental example, the shaft-like body was made of carbon steel, and an outer diameter of the small-diameter portion was 170 mm and an outer diameter of the large-diameter portion was 200 mm. The number of the high-frequency coils was set to 4.

In the present experimental example, the movement velocities of the high-frequency coils in the axial direction of the shaft-like body and in a direction perpendicular to the axial direction were controlled when the high-frequency coils were caused to pass by the large-diameter portion, the level difference portion, and the small-diameter portion in this order, so that a distance between each high-frequency coil and the surface of the shaft-like body was constant. Further, the movement velocities of the high-frequency coils were controlled such that the velocity of the high-frequency coils in the axial direction when the high-frequency coils passed by the level difference portion was lower than the velocity of the high-frequency coils in the axial direction when the high-frequency coils passed by the large-diameter portion or the small-diameter portion. Specifically, the movement velocity (feed velocity) of the high-frequency coils was set to be constant as shown in Table 1 described below. For this reason, the velocity of the high-frequency coils in the axial direction when the high-frequency coils passed by the level difference portion was reduced as compared to the velocity of the high-frequency coils in the axial direction when the high-frequency coils passed by the large-diameter portion or the small-diameter portion. A time of 59 seconds to 74 seconds and a time of 105 seconds to 121 seconds are times during which the high-frequency coils pass by the level difference portions. The movement velocity of the cooling unit was set to be the same as the velocity of the high-frequency coils in the axial direction.

[Table 1]

| Time (sec) | Feed velocity (mm/sec) | Amplitude va ue of current (A) |
| --- | --- | --- |
| 0 to 10 | 0.0 | 28000 |
| to 59 | 2.0 | 28000 |
| to 67 | 2.0 | 28000 |
| to 74 | 2.0 | 28000 |
| to 105 | 2.0 | 28000 |
| to 112 | 2.0 | 34000 |
| to 121 | 2.0 | 34000 |
| to 136 | 2.0 | 30000 |
| to 209 | 2.0 | 28000 |

The temperature of the surface of the shaft-like body at a boundary between the large-diameter portion and the level difference portion was 1176°C. Further, the depth from the surface of a region heated to 800°C or higher at the portion was 5 mm.

[Experimental example 2]

An analysis using the same numerical simulation as that in Experimental example 1 was performed. The same shaft-like body and high-frequency coils as those in Experimental example 1 were employed in the present experimental example. Experimental example 2 is the same as Experimental example 1 in that the movement velocities of the high-frequency coils in the axial direction of the shaft-like body and in a direction perpendicular to the axial direction were controlled, so that a distance between each high-frequency coil and the surface of the shaft-like body was constant.
In the present experimental example, the high-frequency coils were controlled to move at a constant velocity in the axial direction. For this reason, as shown in Table 2 described below, the movement velocity (feed velocity) of the high-frequency coils was changed between the large-diameter portion or the small-diameter portion and the level difference portion. The movement velocity of the cooling unit was set to be the same as the velocity of the high-frequency coils in the axial direction. A time of 36 seconds to 43.4 seconds and a time of 64.1 seconds to 71.95 seconds are times during which the high-frequency coils pass by the level difference portion.

[Table 2]

| Time (sec) | Feed velocity (mm/sec) | Amplitude va ue of current (A) |
| --- | --- | --- |
| 0 to 10 | 0.0 | 28000 |
| to 36 | 3.0 | 35000 |
| to 38.7 | 6.0 | 42000 |
| to 43.4 | 3.0 | 42000 |
| to 64.1 | 3.0 | 33000 |

(continued)

| Time (sec) | Feed velocity (mm/sec) | Amplitude va ue of current (A) |
|---|---|---|
| to 68.8 | 3.0 | 42000 |
| to 71.95 | 8.6 | 45000 |
| to 81.95 | 3.0 | 38000 |
| to 130.65 | 3.0 | 38000 |

The temperature of the surface of the shaft-like body at a boundary between the large-diameter portion and the level difference portion was 1287°C. Further, the depth from the surface of a region heated to 800°C or higher at the portion was 4 mm.

From the above results, in Experimental example 1, an appropriate heating temperature was obtained on the surface of the level difference portion of the shaft-like body and the depth of hardening reaching a predetermined temperature was also sufficient. Further, as can be seen from Tables 1 and 2, in Experimental example 2, the amplitude value of a current applied to the high-frequency coils should be increased around the level difference portion to achieve the above-described heating temperature. On the other hand, in Experimental example 1, it is found that a desired hardening temperature and a desired hardening depth are obtained while an increase in the amplitude value of a current is suppressed.

[Experimental example 3]

In the present experimental example, an analysis using a numerical simulation was performed to verify a hardening state in a case where traverse hardening is performed on a columnar shaft-like body, which is made of carbon steel and has a constant outer diameter (170 mm), using a traverse hardening apparatus including a plurality of high-frequency coils. The shape of the high-frequency induction portion of the high-frequency coil was set to correspond to the outer diameter of the shaft-like body, and the number of the high-frequency coils was set to three.

As shown below, hardness distributions of the shaft-like body in a case where the cooling power of the cooling unit, a distance between the high-frequency coil and the cooling unit, and the movement velocities of the high-frequency coils and the cooling unit were changed were calculated, and a surface hardness and a hardening depth were evaluated. The methods of evaluating a surface hardness and a hardening depth were performed by obtaining a temperature distribution of the shaft-like body using a magnetic field analysis and a heat transfer analysis, inferring the phase transformation from the time series transition of a temperature distribution of each portion of the shaft-like body, and calculating a hardness after cooling. Tables 3 and 4 show a ratio of a surface hardness in a case where a hardness at a martensite fraction of 90% is defined as 1, and Table 5 and Table 6 show a thickness (mm, hardening depth) from the surface in a range in which a hardness reaches a hardness at a martensite fraction of 70% or more. The cooling power of the cooling unit in Tables means the convective heat transfer coefficient of the surface of the shaft-like body. A distance between the high-frequency coil and the cooling unit was set as specified in the above-described embodiment. Further, it was assumed that the high-frequency coils and the cooling unit were moved in the axial direction of the shaft-like body at the same velocity shown in Tables.

[Table 3]

| Distance between high-frequency coil and cooling unit | | 30 mm | | | |
|---|---|---|---|---|---|
| Cooling power of cooling unit | | 5.0 kW/(m$^2$K) | 7.5 kW/(m$^2$K) | 10 kW/(m$^2$K) | 15 kW/(m$^2$K) |
| Movement velocities of high-frequency coils and cooling unit | 1 mm/s | 0.88 | 1.03 | 1.06 | 1.09 |
| | 2 mm/s | 0.97 | 1.06 | 1.09 | 1.10 |
| | 3 mm/s | 1.01 | 1.07 | 1.09 | 1.10 |
| | 9 mm/s | 1.02 | 1.08 | 1.09 | 1.10 |

[Table 4]

| Distance between high-frequency coil and cooling unit | | 90 mm | | | |
|---|---|---|---|---|---|
| Cooling power of cooling unit | | 5.0 kW/(m²K) | 7.5 kW/(m²K) | 10 kW/(m²K) | 15 kW/(m²K) |
| Movement velocities of high-frequency coils and cooling unit | 1 mm/s | 0.76 | 0.88 | 0.92 | 0.92 |
| | 3 mm/s | 0.95 | 1.03 | 1.05 | 1.07 |
| | 9 mm/s | 0.97 | 1.06 | 1.08 | 1.09 |

[Table 5]

| Distance between high-frequency coil and cooling unit | | 30 mm | | | |
|---|---|---|---|---|---|
| Cooling power of cooling unit | | 5.0 kW/(m²K) | 7.5 kW/(m²K) | 10 kW/(m²K) | 15 kW/(m²K) |
| Movement velocities of high-frequency coils and cooling unit | 1 mm/s | 1.5 | 4.0 | 5.4 | 6.8 |
| | 2 mm/s | 3.8 | 6.1 | 6.7 | 7.2 |
| | 3 mm/s | 4.6 | 5.4 | 5.7 | 5.9 |
| | 9 mm/s | 3.7 | 4.0 | 4.1 | 4.2 |

[Table 6]

| Distance between high-frequency coil and cooling unit | | 90 mm | | | |
|---|---|---|---|---|---|
| Cooling power of cooling unit | | 5.0 kW/(m²K) | 7.5 kW/(m²K) | 10 kW/(m²K) | 15 kW/(m²K) |
| Movement velocities of high-frequency coils and cooling unit | 1 mm/s | 0.0 | 1.8 | 2.7 | 3.5 |
| | 3 mm/s | 2.6 | 3.4 | 3.7 | 3.9 |
| | 9 mm/s | 2.9 | 3.7 | 3.9 | 4.1 |

As can be seen from results of Tables 3 and 4, there is a tendency for a hardness, which is due to hardening, to be reduced in a case where the movement velocities of the high-frequency coils and the cooling unit are reduced. On the other hand, a reduction in hardness can be suppressed in a case where a distance between the high-frequency coil and the cooling unit is shortened. From this, it is found that it is possible to ensure a hardening hardness by making a distance between the high-frequency coil and the cooling unit in the axial direction of the shaft-like body when the high-frequency coils pass by the level difference portion shorter than a distance between the high-frequency coil and the cooling unit in the axial direction when the high-frequency coils pass by the small-diameter portion or the large-diameter portion in a case where the shaft-like body includes the level difference portion and the velocity of the high-frequency coils in the axial direction when the high-frequency coils pass by the level difference portion is lower than the velocity of the high-frequency coils in the axial direction when the high-frequency coils pass by the small-diameter portion or the large-diameter portion.

Further, as can be seen from the results of Tables 3 and 4, there is a tendency for a hardness, which is due to hardening, to be reduced in a case where the movement velocities of the high-frequency coils and the cooling unit are reduced. However, a reduction in hardness can be suppressed with the improvement of the cooling power of the cooling unit. From this, it is found that it is possible to ensure a hardening hardness by making the amount or spray pressure of the cooling medium to be sprayed when the high-frequency coils pass by the level difference portion smaller than the amount or spray pressure of the cooling medium to be sprayed when the high-frequency coils pass by the small-diameter portion or the large-diameter portion.

Furthermore, as can be seen from results of Tables 5 and 6, it is possible to keep a hardening depth constant by adjusting the cooling power of the cooling unit according to the movement velocities of the coils and the cooling unit. In Table 5, a convective heat transfer coefficient was adjusted according to a hardening depth of 5 mm. In Table 6, a convective heat transfer coefficient was adjusted according to a hardening depth of 3 mm.

From results of the present experimental example, it is found that it is possible to ensure a desired hardening hardness by appropriately the movement velocity and cooling power of the cooling unit in addition to controlling the velocity of the heating coils. Accordingly, since a change in grain size and a change in the volume fraction of residual austenite can be suppressed, the hardness and mechanical properties of a material can be kept constant.

INDUSTRIAL APPLICABILITY

According to the traverse hardening method and the traverse hardening apparatus of the embodiments of the present invention, desired hardening can be performed on a level difference portion of a shaft-like body, of which an outer diameter is not constant in an axial direction, and in the vicinity thereof. Therefore, the industrial values of the traverse hardening method and the traverse hardening apparatus are extremely high.

REFERENCE SIGNS LIST

    100 Traverse hardening apparatus
    110 Heating unit
    111A, 111B, 211A, 211B, 211C High-frequency coil
    112A, 112B, 212A, 212B, 212C High-frequency induction portion
    113a, 113b, 113c, 113d, 213a, 213b, 213c, 213d, 213e, 213f Conductive portions
    120 Cooling unit
    130 Support unit
    140 Heating unit-moving device
    150 Cooling unit-moving device
    160 Control unit
    10 Shaft-like body
    11A, 11B Large-diameter portion
    12 Small-diameter portion
    13A, 13B Level difference portion


**Claims**

1.  A traverse hardening method of performing hardening on a shaft-like body including a small-diameter portion, a large-diameter portion, and a level difference portion, which connects the small-diameter portion and the large-diameter portion, in an axial direction using a traverse hardening apparatus that includes a plurality of high-frequency coils and a cooling unit, the traverse hardening method comprising:

        heating the shaft-like body with the high-frequency coils while rotating the shaft-like body inserted inside the plurality of high-frequency coils relative to the plurality of high-frequency coils and moving the plurality of high-frequency coils relative to the shaft-like body in the axial direction;
        causing the cooling unit to follow the high-frequency coils from a rear side in a relative movement direction of the high-frequency coils along the axial direction of the shaft-like body to cool a portion, which is heated by the high-frequency coils, with the cooling unit; and
        performing traverse hardening while moving the high-frequency coils in a direction orthogonal to the axial direction of the shaft-like body such that a distance between a surface of the shaft-like body and each of the high-frequency coils is constant,
        wherein a velocity of the high-frequency coils in the axial direction when the high-frequency coils pass by the level difference portion is lower than a velocity of the high-frequency coils in the axial direction when the high-frequency coils pass by the small-diameter portion or the large-diameter portion.

2.  The traverse hardening method according to Claim 1,
    wherein, in a case where the velocity of the high-frequency coils in the axial direction when the high-frequency coils pass by the small-diameter portion or the large-diameter portion is denoted by V0, the velocity of the high-frequency coils in the axial direction when the high-frequency coils pass by the level difference portion is denoted by Vs, and a velocity of the plurality of high-frequency coils in the direction orthogonal to the axial direction is denoted by Vc, Expression 1 is satisfied,

$$V0^2 \leq Vs^2 + Vc^2 \ldots \text{Expression 1.}$$

3. The traverse hardening method according to Claim 1 or 2,
   wherein a distance between the high-frequency coil and the cooling unit in the axial direction when the high-frequency coils pass by the level difference portion is made shorter than a distance between the high-frequency coil and the cooling unit in the axial direction when the high-frequency coils pass by the small-diameter portion or the large-diameter portion.

4. The traverse hardening method according to any one of Claims 1 to 3,

   wherein the cooling unit sprays a cooling medium, and
   an amount or spray pressure of the cooling medium to be sprayed when the high-frequency coils pass by the level difference portion is made smaller than an amount or spray pressure of the cooling medium to be sprayed when the high-frequency coils pass by the small-diameter portion or the large-diameter portion.

5. A traverse hardening apparatus that performs hardening on a shaft-like body including a small-diameter portion, a large-diameter portion, and a level difference portion, which connects the small-diameter portion and the large-diameter portion, in an axial direction, the traverse hardening apparatus comprising:

   a plurality of high-frequency coils and a cooling unit that are provided in the axial direction; and
   a control unit that is configured to control movement of the plurality of high-frequency coils and the cooling unit,
   wherein each of the high-frequency coils includes an high-frequency induction portion for heating the shaft-like body and a conductive portion connected to the high-frequency induction portion, is movable relative to the shaft-like body in the axial direction, and is relatively movable in a plane perpendicular to the axial direction,
   the cooling unit includes a spray portion configured to spray a cooling medium and is movable relative to the shaft-like body in the axial direction, and
   the control unit is configured to
   control movement of the high-frequency coils in the plane such that a distance between a surface of the shaft-like body and each of the high-frequency coils is constant, and
   control a velocity of the high-frequency coils such that a velocity of the high-frequency coils in the axial direction when the high-frequency coils pass by the level difference portion is lower than a velocity of the high-frequency coils in the axial direction when the high-frequency coils pass by the small-diameter portion or the large-diameter portion.

6. The traverse hardening apparatus according to Claim 5,
   wherein, in a case where the velocity of the high-frequency coils in the axial direction when the high-frequency coils pass by the small-diameter portion or the large-diameter portion is denoted by V0, the velocity of the high-frequency coils in the axial direction when the high-frequency coils pass by the level difference portion is denoted by Vs, and a velocity of the plurality of high-frequency coils in a direction orthogonal to the axial direction is denoted by Vc, the control unit is configured to control the high-frequency coils such that Expression 1 is satisfied,

$$V0^2 \leq Vs^2 + Vc^2 \ldots \text{Expression 1.}$$

7. The traverse hardening apparatus according to Claim 5 or 6,
   wherein the control unit is configured to control a distance between the high-frequency coil and the cooling unit such that a distance between the high-frequency coil and the cooling unit in the axial direction when the high-frequency coils pass by the level difference portion is shorter than a distance between the high-frequency coil and the cooling unit in the axial direction when the high-frequency coils pass by the small-diameter portion or the large-diameter portion.

8. The traverse hardening apparatus according to any one of Claims 5 to 7,
   wherein the control unit is configured to control an amount or spray pressure of the cooling medium to be sprayed such that an amount or spray pressure of the cooling medium to be sprayed when the high-frequency coils pass by the level difference portion is smaller than an amount or spray pressure of the cooling medium to be sprayed when the high-frequency coils pass by the small-diameter portion or the large-diameter portion.

# FIG. 1

## FIG. 2

## FIG. 3

FIG. 4

FIG. 5

FIG. 6

FIG. 7

FIG. 8

FIG. 9

FIG. 10

# EP 4 589 030 A1

<table>
<tr><td colspan="2">INTERNATIONAL SEARCH REPORT</td><td>International application No.<br><br>**PCT/JP2022/034240**</td></tr>
</table>

**A.    CLASSIFICATION OF SUBJECT MATTER**

*C21D 9/28*(2006.01)i; *C21D 1/10*(2006.01)i
FI:    C21D9/28 A; C21D9/28 B; C21D1/10 H; C21D1/10 J

According to International Patent Classification (IPC) or to both national classification and IPC

**B.    FIELDS SEARCHED**

Minimum documentation searched (classification system followed by classification symbols)

C21D9/28; C21D9/00; C21D1/00-1/84; C21D11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2016-89262 A (NETUREN CO LTD) 23 May 2016 (2016-05-23) | 1-8 |
| A | JP 2009-19230 A (KOMATSU LTD) 29 January 2009 (2009-01-29) | 1-8 |
| A | JP 2015-108188 A (NETUREN CO LTD) 11 June 2015 (2015-06-11) | 1-8 |
| A | JP 2005-344159 A (NETUREN CO LTD) 15 December 2005 (2005-12-15) | 1-8 |
| A | CN 1600873 A (NATIEFU DRIVE SHAFTS CO., LTD., SHANGHAI) 30 March 2005 (2005-03-30) | 1-8 |
| A | WO 2019/181382 A1 (NIPPON STEEL CORP) 26 September 2019 (2019-09-26) | 1-8 |

☐ Further documents are listed in the continuation of Box C.         ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/034240**

| Patent document cited in search report | | | Publication date (day/month/year) | Patent family member(s) | | | Publication date (day/month/year) |
|---|---|---|---|---|---|---|---|
| JP | 2016-89262 | A | 23 May 2016 | CN | 105586475 | A | |
| JP | 2009-19230 | A | 29 January 2009 | (Family: none) | | | |
| JP | 2015-108188 | A | 11 June 2015 | (Family: none) | | | |
| JP | 2005-344159 | A | 15 December 2005 | (Family: none) | | | |
| CN | 1600873 | A | 30 March 2005 | (Family: none) | | | |
| WO | 2019/181382 | A1 | 26 September 2019 | EP | 3770285 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008150640 A

- JP 3610457 B

**Non-patent literature cited in the description**

- *Mitsuka: Cooling Technology of High Temperature Steel, Iron and Steel*, 1993, vol. 79 (6), N405-N416